# EUROPÄISCHE PATENTSCHRIFT

(11) **EP 1 664 689 B1**
(45) Veröffentlichungstag und Bekanntmachung des Hinweises auf die Patenterteilung: **05.12.2018**
(21) Anmeldenummer: 04764885.2
(22) Anmeldetag: 07.09.2004
(51) Int. Cl.: G01F 1/84

(54) **VERFAHREN ZUM EINSTELLEN EINER MECHANISCHEN EIGENFREQUENZ EINES HOHLKÖRPERS**
METHOD FOR ADJUSTING A MECHANICAL NATURAL FREQUENCY
PROCEDE POUR REGLER LA FREQUENCE PROPRE MECANIQUE D'UN CORPS CREUX

(30) Priorität: 25.09.2003 DE 10344742
(43) Veröffentlichungstag der Anmeldung: 07.06.2006
(73) Patentinhaber: Endress + Hauser Flowtec AG, 4153 Reinach (CH)
(72) Erfinder: BITTO, Ennio, CH-4147 Aesch (CH); SCHÜTZE, Christian, CH-4055 Basel (CH); BERNHARD, Holger, 79639 Grenzach-Wyhlen (DE)
(74) Vertreter: Andres, Angelika Maria
(86) Internationale Anmeldenummer: PCT/EP2004/009939
(87) Internationale Veröffentlichungsnummer: WO 2005/038411

(56) Entgegenhaltungen:
- US-A- 3 257 850

## Beschreibung

Die Erfindung betrifft ein Verfahren zum Einstellen einer mechanischen Eigenfrequenz eines zumindest teilweise aus einem duktilen Material bestehenden, als Aufnehmer-Gehäuses eines Messaufnehmers oder als Meßrohrs (1, 2) eines Meßaufnehmers dienenden Hohlkörpers für ein In-Line-Meßgerät.

In der Prozeß-Meß- und Automatisierungstechnik werden für die Messung physikalischer Parameter eines in einer Rohrleitung strömenden Fluids, wie z.B. dem Massedurchfluß, der Dichte und/oder der Viskosität, oftmals solche Meßgeräte verwendet, die mittels eines vom Fluid durchströmten Meßaufnehmers vom Vibrationstyp und einer daran angeschlossenen Meß- und Betriebsschaltung, im Fluid Reaktionskräfte, wie z.B. mit dem Massedurchfluß korrespondierende Corioliskräfte, mit der Dichte korrespondierende Trägheitskräfte und/oder mit der Viskosität korrespondierende reibungskräfte etc., bewirken und von diesen abgeleitet ein den jeweiligen Massedurchfluß und/oder ein die jeweilige Dichte des Fluids repräsentierendes Meßsignal erzeugen.

Derartige Meßaufnehmer vom Vibrationstyp sind z.B. in der WO-A 03/021202, der WO-A 03/021203 WO-A 01/ 33 174, der WO-A 00/57 141, der WO-A 98/ 07 009, der US-A 57 96 011, der US-A 53 01 557, der US-A 48 76 898, der EP-A 553 939, der EP-A 1 001 254 oder der EP-A 1 154 243 beschrieben. Zum Führen des Fluids umfassen die Meßaufnehmer jeweils mindestens einen als Meßrohr ausgebildeten, schwingfähig gehalterten Hohlkörper mit einem Rohrsegment, das zum Erzeugen oben genannter Reaktionskräfte, angetrieben von einer elektromechanischen Erregeranordnung, im Betrieb vibrieren gelassen wird. Zum Erfassen, insb. einlaßseitger und auslaßseitiger, Vibrationen des Rohrsegments weisen die Meßaufnehmer ferner jeweils eine auf Bewegungen des Rohrsegments reagierende Sensoranordnung auf.

Bei Meßaufnehmern der beschriebenen Art sind die Meßrohre sowie die Erreger- und die Sensoranordnung üblicherweise innerhalb eines weiteren, als Aufnehmer-Gehäuses ausgebildeten und der Halterung des Meßrohrs dienden Hohlkörpers angeordnet. Das Aufnehmer-Gehäuse dient neben der Halterung des wenigstens einen Meßrohrs insb. auch dazu, dieses, die Erreger- und die Sensoranordnung sowie weitere innenliegenden Bauteile des Meßaufnehmers vor äußeren Umwelteinflüssen, wie z.B. Staub oder Spritzwasser etc., zu schützen. Beispiele für solche Aufnehmer-Gehäuse sind insb. in der WO-A 03/021202, der WO-A 03/021203, WO-A 01/ 33 174, der WO-A 00/ 57 141, der US-A 53 01 557, der EP-A 1 001 254 oder in der der EP-A 1 154 243 gezeigt. Seitens der Anwender wird an derartige Aufnehmer-Gehäuse häufig auch die Anforderung gestellt, daß sie im Falle eines Berstens des Rohrsegments dem dann zumeist deutlich erhöhten Innendruck zumindest für eine vorgegebene Dauer leckfrei standhalten, vgl. hierzu auch die WO-A 03/021203, die WO-A 00/ 57 141, die US-A 60 44 715, die US-A 53 01 557 oder die EP-A 1 001 254. Zumindest für Anwendungen mit toxischen oder leicht entzündbaren Fluiden muß das Gehäuse ggf. auch die an einen Sicherheitsbehälter zu stellenden Anforderungen erfüllen können.

Die Entwicklung der Meßaufnehmer hat in zunehmendem Maße auch dazu geführt, daß die Masse der Meßaufnehmer deutlich reduziert werden konnten. Dies führte insb. auch bei den Aufnehmer-Gehäusen dazu, daß diese bei modernen Meßaufnehmern trotz der geforderten hohen Druckfestigkeit eine zumeist eher geringere Wandstärke von kleiner als 5 mm einhergehend mit einer vergleichsweise geringen Masse aufweisen. Allerdings kann die Verringerung der Masse des Aufnehmer-Gehäuses ggf. dazu führen, daß sich die mechanischen Eigenfrequenzen der verwendeten Meßrohre und des Aufnehmer-Gehäuse immer weniger voneinander unterscheiden, was dann wiederum zu Lasten der Meßgenauigkeit des Meßgeräts geht. Eine Möglichkeit zur Reduzierung dieses Effekts besteht beispielsweise darin, wie z.B. auch in der WO-A 01/ 33 174 vorgeschlagen, Zusatzmassen am Aufnehmer-Gehäuses zu fixieren um so eine gezielte Verstimmung gegenüber dem Meßrohr bzw. den Meßrohren zu erreichen.

Ein Nachteil einer solchen Lösung ist aber vor allem darin zu sehen, daß dies zusätzliche konstruktive Maßnahmen erfordert einherhergend mit einem Mehraufwand bei der Fertigung des Meßaufnehmers. Darüber hinaus kann das Anbringen solcher Zusatzmassen auch dazu führen, daß das Aufnehmer-Gehäuse eine Vielzahl neuer Schwingungsmoden mit ggf. anderweitig störenden Eigenfrequenzen aufweisen kann, beispielsweise im Hinblick auf die angeschlossene Rohrleitung.

Im Dokument US 3 257 850 A1 wird ein Verfahren zum Einstellen einer mechanischen Eigenfrequenz eines Messrohrs eines Messaufnehmers beschrieben, wobei eine innere Atmosphäre des schlussendlich hermetisch verschlossenen Messrohres unter permanentem Überdruck steht.

Ausgehend vom genannten Stand der Technik besteht daher eine Aufgabe der Erfindung darin, ein Verfahren anzugeben, mit dem eine mechanische Eigenfrequenz eines Aufnehmer-Gehäuses und/oder eine Meßrohr eines Meßaufnehmers vom Vibrationstyp einfach und schnell verändert und somit auf einen bestimmten Wert möglichst genau eingestellt werden kann. Zu dem soll das Verfahren möglichst ohne erheblichen Mehraufwand auch in bestehende Fertigungslinien für solche Meßaufnehmer integrierbar sein.

Zur Lösung der Aufgabe besteht die Erfindung in einem Verfahren zum Einstellen einer mechanischen Eigenfrequenz eines zumindest teilweise aus einem duktilen Material bestehenden, als Aufnehmer-Gehäuses eines In-Line-Meßaufnehmers oder eines Meßrohrs eines In-Line-Messaufnehmers dienenden Hohlkörpers, welches Verfahren folgende Schritte umfaßt:
- Ändern eines statischen Außendrucks einer den Hohlkörper umgebenden Atmosphäre und/oder Ändern eines in einem im wesentlichen druckdicht abgeschlossenen Lumen des Hohlkörpers herrschenden statischen Innendrucks zum Erzeugen einer Druckdifferenz zwischen dem Lumen und der den Hohlkörper umgebenden Atmosphäre,
- Einstellen der Druckdifferenz auf einen Wert, der ein Dehnen des Materials des Hohlkörpers bewirkt, sowie
- Fließenlassen zumindest eines Anteils des Materials des Hohlkörpers unter Einwirkung der Druckdifferenz zum plastischen Verformen des Materials.

Zudem besteht die Erfindung darin, einen gemäß dem Verfahren der Erfindung abgestimmten Hohlkörper als Aufnehmer-Gehäuse eines Meßaufnehmers, insb. eines Meßaufnehmers vom Vibrationstyp, für ein In-Line-Meßgerät oder als Meßrohr eines Meßaufnehmers, insb. eines Meßaufnehmers vom Vibrationstyp, zum Führen eines zu messenden Mediums zu verwenden, das in einer an das Meßrohr angeschlossenen Rohrleitung strömt.

Nach einer ersten Ausgestaltung der Erfindung umfaßt der Schritt des Erzeuges der Druckdifferenz zwischen dem Lumen und der den Hohlkörper den Schritt Einströmenlassen eines unter Druck stehenden Fluids, insb. Luft oder Stickstoff.

Nach einer zweiten Ausgestaltung der Erfindung umfaßt das Verfahren weiters umfassend den Schritt des weiteren Erhöhens der Druckdifferenz auch nach dem Beginn des plastischen Verformens des Hohlkörpers. Ein Grundgedanke der Erfindung besteht darin, daß der Hohlkörper durch ein geeignets Einstellen der Druckdifferenz, insb. durch Erhöhen des Innendrucks im Lumen des betreffenden Hohlkörpers, zumindest abschittsweise geringfügig plastisch verformt und so auf sehr einfache Weise eine Erhöhung zumindest einer für den Betrieb des Meßaufnehmers kritischen mechanischen Eigenfrequenz erzielt wird.

Die Erfindung sowie Vorteile der Erfindung werden nun anhand der Figuren der Zeichnung näher erläutert, in der ein bevorzugtes Ausführungsbeispiel dargestellt ist. Funktionsgleiche Teile sind in den einzelnen Figuren mit denselben Bezugszeichen versehen, die jedoch in nachfolgenden Figuren nur dann wiederholt sind, wenn es sinnvoll erscheint.
- Fig. 1: zeigt perspektivisch ein In-Line-Meßgerät zum Messen eines in einer Rohrleitung strömenden Mediums,
- Fig. 2: zeigt perspektivisch mechanische Einzelheiten und Komponenten eines für ein In-Line-Meßgerät gemäß Fig. 1 geeigneten Meßaufnehmer vom Vibrationstyp ohne vervollständigtes Gehäuse,
- Fig. 3: zeigt eine Vorderansicht des Meßaufnehmers von Fig. 2,
- Fig. 4: zeigt den Meßaufnehmers gemäß Fig. 2 in einer geschnittenen ersten Seitenansicht,
- Fig. 5: zeigt den Meßaufnehmer gemäß Fig. 2 in einer geschnittenen zweiten Seitenansicht,
- Fig. 6: zeigt schematisch eine Ausgestaltung des Verfahrens der Erfindung.
- Fig. 7: zeigt eine Ausgestaltung des Meßaufnehmers gemäß Fig. 2 in einer geschnittenen ersten Seitenansicht und
- Fig. 8: zeigt den Meßaufnehmer gemäß Fig. 4 in einer geschnittenen zweiten Seitenansicht,

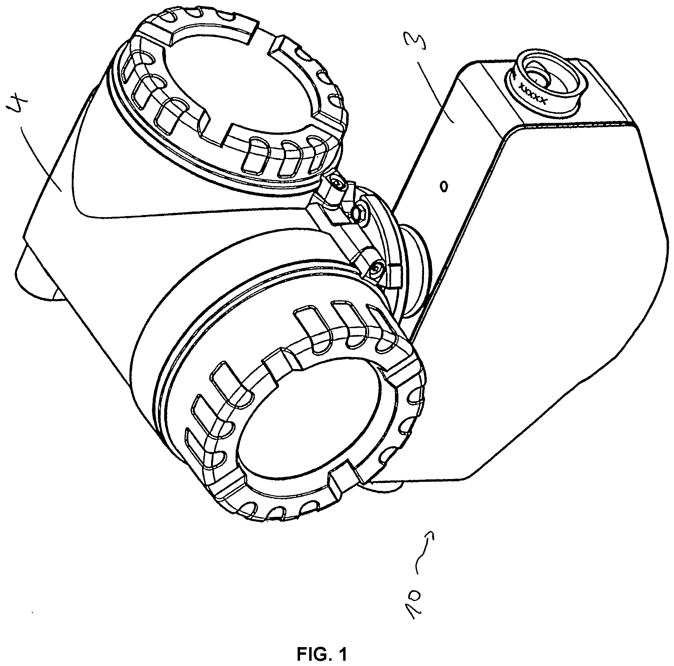

In Fig. 1 ist ein In-Line-Meßgerät zum Messen eines in einer Rohrleitung strömenden Mediums dargestellt. Das In-Line-Meßgerät umfaßt einen in einem vorzugsweise metallischen Aufnehmer-Gehäuse 3 untergebrachten physikalisch-elektrischen Meßaufnehmer sowie eine in einem Elektronik-Gehäuse 4 untergebrachte und mit dem Meßaufnehmer 10 elektrisch verbundene Betriebs- und Auswerte-Elektronik. Das In-Line-Meßgerät kann beispielsweise dazu dienen, einen Massendurchfluß, eine Dichte und/oder eine Viskosität besagten Mediums zu erfassen.

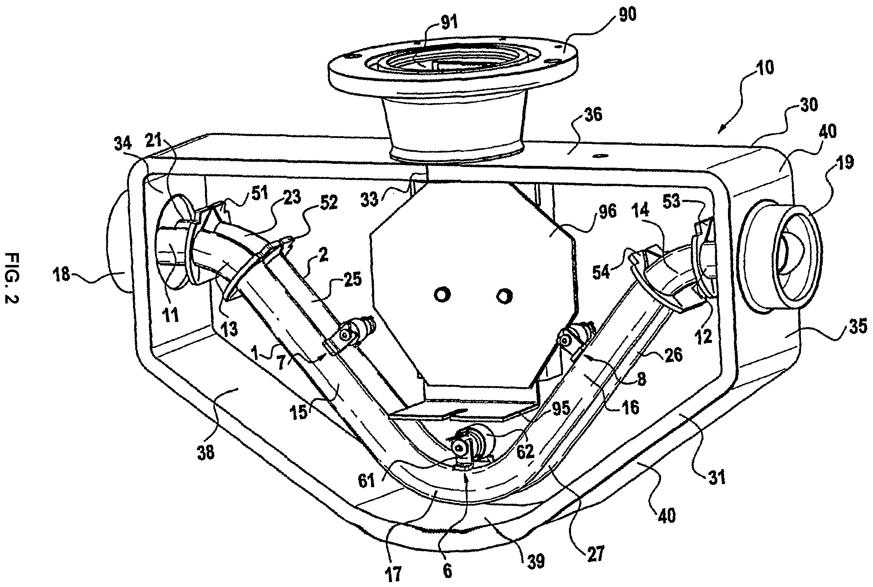

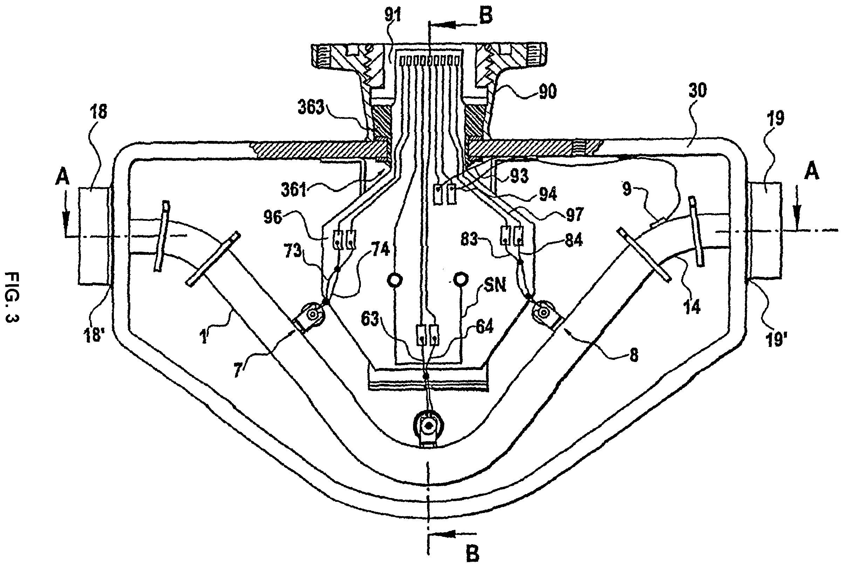

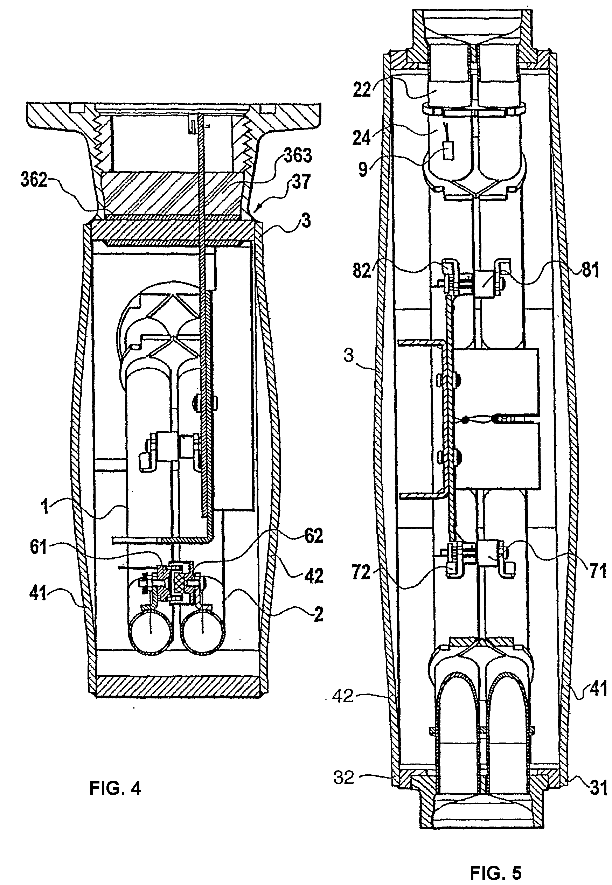

In den Fig. 2 bis 5 ist in unterschiedlichen Darstellungsarten ein Ausführungsbeispiel eines dafür geeigneten Meßaufnehmers 1 gezeigt, und zwar sind in der Fig. 2 die Seitenansicht des Meßaufnehmers 1, in Fig. 3 dessen Vorderansicht sowie in den Fig. 4 und 5 perspektivische Ansichten des Meßaufnehmers 1 aus zwei unterschiedlichen Blickwinkeln dargestellt. Die Fig. 2 bis 5 werden im Folgenden gemeinsam erläutert.

Der Meßaufnehmer 10 ist im Betrieb in den Verlauf der - hier nicht dargestellten - Rohrleitung über geeignete Anschlußflansche eingesetzt, die von einem zu messenden, beispielsweise flüssigen, gasförmigen oder dampfförmigen, Medium durchströmt ist. Anstatt mittels Flanschen kann der Meßaufnehmer 10 an die Rohrleitung auch durch andere bekannte Mittel angeschlossen werden, wie z.B. mittels Triclamp-Anschlüssen oder Schraubverbindungen. Der Meßaufnehmer 1 weist weiters mindestens ein Meßrohr 1 zum Führen des Mediums auf; neben dem Messrohr 1 kann ferner, wie auch in den Fig. 2, 4 oder 5 gezeigt, beispielsweise auch ein zweites Meßrohr 2 vorgesehen sein.

Beim hier gezeigten Ausführungsbeispiel handelt es sich um einen Meßaufnehmer vom Vibrationstyp. Meßwandler vom Vibrationstyp dienen bekanntlich dazu, im durch das jeweilige Meßrohr hindurchströmenden Medium mechanische Reaktionskräfte, z.B. massendurchflußabhängige Coriolis-Kräfte, dichteabhängige Trägheitkräfte und/oder viskositätsabhängige Reibungskräfte, zu erzeugen, die meßbar, insb. sensorisch erfaßbar, auf das wenigstens eine Meßrohr 1 zurückwirken. Abgeleitet von diesen Reaktionskräften können so in der dem Fachmann bekannten Weise z.B. ein Massedurchfluß m, eine Dichte ρ und/oder eine Viskosität η des im jeweiligen Meßrohr strömenden Mediums gemessen werden. Zum wiederholten, insb. periodischen, Erzeugen der besagten Reakionskräfte im Medium umfaßt der Meßaufnehmer ferner eine auf das wenigstens eine Meßrohr einwirkende Erregeranordnung. Außerdem weist der Meßaufnehmer eine auf mechanische Schwingungen des wenigstens einen Meßrohrs 1 reagierende Sensoranordnung auf, die dazu dient, wenigstens ein Meßsignal zu erzeugen, das einen zu messenden momentanen physikalischen Zustand des Mediums oder dessen Änderungen repräsentiert.

Beim gezeigten Ausführungsbeispiel ist das Meßrohr 1 in einer ersten gedachten Rohrebene V-förmig gebogen und bezüglich einer ersten Symmetrielinie symmetrisch ist. Das Meßrohr 2 ist im wesentlich identisch zum Meßrorh 1 geformt und im wesentlich zu diesem parallel verlaufend angeordnet. Ferner sind die Meßrohre 1, 2 vorzugsweise jeweils einstückig ausgebildet. Anstelle der hier beispielhaft gezeigten Meßrohre 1, 2 können aber auch andere Rohrformen gewählt werden. Beipielsweise haben sich bei Meßaufnehmern vom Vibrationstyp auch U-förmig, Ωförmig oder Triangel-förmig gekrümmte Meßrohre bewährt. Darüberhinaus können die beiden Meßrohre 1, 2 aber auch im wesentlichen gerade geformt sein.

Das in Fig. 2 gezeigte Meßrohr 1 hat ein im wesentlichen gerades Einlaßsegment 11 und ein gerades Auslaßsegment 12. Ferner weist das Meßrohr 1 einen mit dem Einlaß-Rohrsegment 11 verbundenes Einlaß-Bogensegment 13, ein mit dem Auslaß-Rohrsegment 12 verbundenes Auslaß-Bogensegment 14, ein mit dem Einlaß-Bogensegment 13 verbundenes im wesentlichen gerades erstes Mittelrohrsegment 15, ein mit dem Auslaß-Bogensegment 14 verbundenes, im wesentlichen zweites Mittelrohrsegment 16 und einen mit den Mittelrohrsegmenten 15, 16 verbundenes Scheitel-Bogensegment 17. Wie in der Fig. 2 dargestellt, sind das Einlaß- und das Auslaßsegment 11, 12 des Meßrohrs 1 bevorzugt zueinander und zu einer gedachten gemeinsamen Ein-/ Auslaßachse A₁ fluchtend ausgerichtet. Die Einlaß- bzw. Auslaß-Rohrsegmente 11, 12, 21, 22 sind jeweils endseits in einem Tragrahmen 30 des Meßaufnehmers so fixiert, daß die Meßrohre 1, 2 schwingfähig darin gehaltert sind. Der Tragrahmen 30 ist, wie aus der Zusammenschau von Fig. 1, 2 und Fig. 4 ersichtlich, Teil des Aufnehmer-Gehäuses 3.

Das Meßrohr 2 ist im wesentlichen identisch zum Meßrohr 1 ausgebildet, d.h. es weist ebenfalls ein gerades Einlaß-Rohrsegment 21, ein gerades Auslaß-Rohrsegment 22, einen mit dem Einlaß-Rohrsegment 21 verbundenes Einlaß-Bogensegment 23, ein mit dem Auslaß-Rohrsegment 22 verbundenes Auslaß-Bogensegment 24, ein mit dem Einlaß-Bogensegment 23 verbundenes im wesentlichen gerades erstes Mittelrohrsegment 25, ein mit dem Auslaß-Bogensegment 24 verbundenes, im wesentlichen gerades zweites Mittelrohrsegment 26 und einen mit den Mittelrohrsegmenten 25, 26 verbundenes Scheitel-Bogensegment 27. Eine mit dem Einlaß- und dem Auslaßsegment 21, 22 fluchtende gedachte Ein-/ Auslaßachse A₂ des Meßrohrs 2 verläuft zudem im wesentlichen parallel zur Ein-/ Auslaßachse A₁ des Meßrohrs 2. Im in Fig. 2 gezeigten Ausführungsbeispiel sind die Einlaß- bzw. Auslaß-Bogensegmente 13, 14, 23, 24 wie auch die Scheitelbögen 17, 27 im wesentlichen kreisbogenförmig ausgebildet.

Die beiden Meßrohre 1, 2 bestehen im Ausführungsbeispiel aus rostfreiem Stahl, wobei nach einer Ausgestaltung der Erfindung der rostfreie Stahl mit der europäischen Werkstoffnummer 1.4539, die der amerikanischen Bezeichnung 904 L entspricht, und für die Verteilersegmente 18, 19 der rostfreie Stahl mit der europäischen Werkstoffnummer 1.4404, die der amerikanischen Bezeichnung 316 L entspricht, als Material für die Meßrohre 1, 2 verwendet wird. Allerdings können die Meßrohre 1, 2 auch aus anderen dem Fachmann geläufigen Materialien, wie z.B. Edelstahl, Titan, Zirkonium, Tantal oder dergleichen gefertigt sein.

Wie in Fig. 2 dargestellt, sind die beiden Einlassstücke 11, 21 in einem gemeinsamen Einlass-Verteilerstück 18 und die beiden Auslassstücke 12, 22 in einem gemeinsamen Auslass-Verteilerstück 19 fixiert. Die Verteilerstücke 18, 19 sind von einem Tragrahmen 30, der Teil des Gehäuses 3 ist, so gehaltert, daß die Meßrohre 1, 2 im Gehäuses 3 angeordnet sind.

Die Meßrohre 1, 2 sowie die Verteilerstücke 18, 19 bestehen im Ausführungsbeispiel aus rostfreiem Stahl, wobei bevorzugt für die Messrohre 1, 2 der rostfreie Stahl mit der europäischen Werkstoffnummer 1.4539, die der amerikanischen Bezeichnung 904 L entspricht, und für die Verteilerstücke 18, 19 der rostfreie Stahl mit der europäischen Werkstoffnummer 1.4404, die der amerikanischen Bezeichnung 316 L entspricht, verwendet wird. Zum Einsetzen des Meßaufnehmers in die Rohrleitung werden entsprechend den Erfordernissen und Gegebenheiten des Einbauorts herstellerseitig an das Einlass- und das Auslass-Verteilerstück 18, 19 Verbindungsvorrichtungen angebracht, wie z.B. Stutzen mit einem Aussen- oder mit einem Innengewinde, Flansche oder Klemmvorrichtungen, wie sie z.B. unter der eingetragenen Marke Triclamp handelsüblich sind.

Nach einer Ausgestaltung der Erfindung sind die Meßrohre 1, 2 mittels einer ersten Knotenplatte 51 in der Nähe einer Stelle mechanisch miteinander verbunden, an der das jeweilige Ein-Rohrsegment 11, 21 in das jeweilige Einlaß-Bogensegment 13, 23 übergeht, und mittels einer zweiten Knotenplatte 52 in der Nähe einer Stelle mechanisch miteinander verbunden, an der das jeweilige Einlaß-Bogensegment 13, 23 in das jeweilige erste Mittelrohrsegment 15, 25 übergeht. Nach weiteren Ausgestaltung der Erfindung sind die Meßrohre 1, 2 ferner mittels einer dritten Knotenplatte 53 in der Nähe einer Stelle mechanisch miteinander verbunden, an der das jeweilige Auslaß-Rohrsegment 12, 22 in das jeweilige Auslaß-Bogensegment 14, 24 übergeht, und mittels einer vierten Knotenplatte 54 in der Nähe einer Stelle mechanisch miteinander verbunden, an der das jeweilige Auslaß-Bogensegment 14, 24 in das jeweilige zweite Mittelrohrsegment 16, 26 übergeht. Die vier Knotenplatten 51, 52, 53, 54 sind bevorzugt dünne Scheiben aus z.B. rostfreien Stahl, insb. wie er für das Aufnehmer-Gehäuse 3 verwendet wird. Diese Scheiben sind mit Bohrungen, deren Aussen-Durchmesser dem der Meßrohre 1, 2 entspricht, und mit Schlitzen versehen, so dass die Scheiben zunächst auf die Meßrohre 1, 2 aufgeklemmt und danach mit ihnen hartverlötet werden können; dabei werden auch die Schlitze miteinander hartverlötet, so dass die Scheiben ungeschlitzt als Knotenplatten auf den Meßrohren 1, 2 sitzen.

Wie bereits erwähnt, ist es für die Messung erforderlich, die beiden Meßrohre 1, 2 schwingen zu lassen. Zum Antreiben der Meßrohre 1, 2 weist die Erregeranordnung dementsprechend mindestens einen elektromechanischen Schwingungserreger 6 auf. Dieser dient dazu, eine, von einer entsprechenden - hier nicht näher gezeigten - Meß- und Betriebsschaltung eingespeiste, elektrische Erregerleistung in solche, z.B. pulsierenden oder harmonischen, Erregerkräfte umzuwandeln, die symmetrisch, also gleichzeitig, gleichmäßig jedoch gegensinnig, auf Meßrohr 1 und 2 einwirken und somit die zueinander gegenphasigen Schwingungen der Meßrohre 1, 2 erzeugen. Die Erregerkräfte können in der dem Fachmann bekannten Weise z.B. mittels einer Strom- und/ oder Spannungs-Regelschaltung, hinsichtlich ihrer Amplitude und, z.B. mittels einer Phasen-Regelschleife, hinsichtlich ihrer Frequenz eingestellt werden, vgl. hierzu auch die US-A 48 01 897. Es sei noch erwähnt, daß die Meß- und Betriebsschaltung in der dem Fachmann bekannten Weise im Elektronik-Gehäuse 4 untergebracht ist, das z.B. direkt am Meßaufnehmer anmontiert oder von diesem entfernt angeordnet sein kann. Anders gesagt, werden im in Fig. 2 gezeigten Meßaufnehmer die Meßrohre 1, 2 im Betrieb mittels der Erregeranordnung 6 in stimmgabelartige Biegeschwingungen versetzt. Die Biegeschwingungen haben vorzugsweise eine Schwingfrequenz, die in etwa gleich einer mechanischen Eigenfrequenz eines die Meßrohre 1, 2 umfassenden Schwingsystems ist oder die in der Nähe einer dieser Eigenfrequenzen liegt. Infolge der mechanischen Schwingungen der Meßrohre 1, 2 werden im jeweils hindurchgeführten Medium die oben bereits erwähnten mechanische Reaktionskräfte erzeugt, beispielsweise Coriolis-Kräfte, Reibungskräfte oder auch Trägheits- oder Beschleunigungskräfte, wodurch der physikalische Zustand, insb. der dynamische oder kinematische Zustand, des Mediums wiederholt verändert wird.

Ein erster Teil 61 des Erregers 61 ist am Scheitel-Bogensegment 17 des Meßrohrs 1 im Bereich von dessen oben erwähnter Symmetrielinie und ein zweiter Teil 62 des Erregers 61 am Scheitel-Bogensegment 27 des Meßrohrs 2 im Bereich von dessen oben erwähnter Symmetrielinie fixiert, vgl. Fig. 4. Im Ausführungsbeispiel gemäß Fig. 2 ist der Schwingungserreger 6 ein simultan auf beide Meßrohre 1, 2 wirkender, elektrodynamischer Erreger, worin der erste Teil 61 eine Spulen-Anordnung ist und der zweite Teil 62 eine Dauermagnet-Anordnung ist, die mit der Spulen-Anordnung durch Eintauchen zusammenwirken kann.

Die dem Erfassen von Schwingungen der vibrierenden Meßrohre 1, 2 dienende Sensoranordnung umfaßt beim in Fig. 2 gezeigten Meßaufnehmer 10 einen einlaßseitigen ersten Schwingungssensor 7 und einen auslaßseitigen zweiten Schwingungssensor 8, welche beiden Schwingungssensoren 7, 8 auf Bewegungen der Meßrohre 1, 2, insb. deren laterale Auslenkungen und/oder Verformungen, reagierend, ein entsprechendes erstes bzw. zweites Schwingungssignal liefern.

Die Schwingungssensoren 7, 8 sind dabei im wesentlichen symmetrisch bezüglich der genannten Symmetrielinien der Meßrohre 1, 2 daran fixiert. Zudem sind die beiden Schwingungssensor 7, 8 bevorzugt baugleich; ferner können sie auch im wesentlichen baugleich zum Schwingungserreger 6 ausgebildet sein. Ein erster Teil 71 des Schwingungssensors 7 ist am Mittelrohrsegment 15 des Meßrohrs 1 und ein zweiter Teil 72 am Mittelrohrsegment 25 des Meßrohrs 1 fixiert, vgl. Fig. 3. Ein erster Teil 81 des Schwingungssensors 8 ist am Mittelrohrsegment 16 des Meßrohrs 2 und ein zweiter Teil 82 am Mittelrohrsegment 26 des Meßrohrs 2 fixiert, vgl. Fig. 3. Die Schwingungssensoren 7, 8 sind im Ausführungsbeispiel der Figuren differentiell wirkende, also eine Weg- oder Geschwindigkeitsdifferenz zwischen beiden Meßrohren direkt erfassende, elektrodynamische Geschwindigkeitssensoren, d.h. die Teile 71, 81 sind jeweils eine Spulen-Anordnung und die Teile 72, 82 sind jeweils eine Dauermagnet-Anordnung, die in die zugehörige Spulen-Anordnung eintauchen kann. Als Schwingungssensoren 7, 8 können aber beispielsweise auch Weg- oder Beschleunigungssensor verwendet werden. Bei dem in Fig. 2 gezeigten Meßaufnehmer entsprechen die von der Sensoranordnung gelieferten Meßsignale praktisch also den beiden Schwingungssignalen, wobei eine gegenseitige Phasenlage der beiden Schwingungssignale von den momentanen Massendurchflüssen in den Meßrohren 1, 2 und eine jeweilige Signalfrequenz von den momentanen Dichten der in den Meßrohren 1, 2 strömenden Medien abhängig sind.

Der bereits erwähnte Tragrahmen 30 umfasst im in Fig. 2 gezeigten Ausführungsbeispiel ein ebenes Einlaß-Rahmensegment 31, ein ebenes Auslaß-Rahmensegment 35 sowie ein das Einlaß- und das Auslaß-Rahmensegment 31, 32 verbindendes, Durchführungs-Rahmensegment 33, in dem eine elektrische Durchführung 34 (nur in Fig. 4 zu sehen) druckdicht fixiert ist. Das im gezeigten Ausführungsbeispiel ebene Durchführungs-Rahmensegment 33 bildet mit dem Einlaß- und dem Auslaß-Rahmensegment 31, 32 jeweils einen rechten Winkel. Der Tragrahmen 30 umfasst ferner ein ebenes erstes Ansatz-Rahmensegment 34, das an das Einlaß-Rahmensegment 31 unter einem Winkel angesetzt ist, der größer als 90° ist - im Ausführungsbeispiel sind das etwa 120°. Der Tragrahmen 30 umfasst schließlich ein in das erste Ansatz-Rahmensegment 34 übergehendes, gebogenes Scheitel-Rahmensegment 35 und ein an das Auslaß-Rahmensegment 32 unter dem genannten Winkel angesetztes, ebenfalls in das Scheitel-Rahmensegment 35 übergehendes, ebenes zweites Ansatz-Rahmensegment 36. Ebenso wie die Meßrohre 1, 2 ist der Tragrahmen 30 im gezeigten Ausführungsbeispiel einstückig ausgebildet und aus einem eine Vorderfläche 301 und eine Hinterfläche 302 (nur in Fig. 3 zu sehen) aufweisenden Flach-Edelstahl von konstanter Breite und Dicke durch entsprechendes Biegen und Verschweißen der Enden, vgl. die Naht 303, hergestellt worden.

Der im Ausführungsbeispiel gezeigte Tragrahmen 30 ist ferner durch ein linkes Seiten-Rahmensegment 41 und ein rechtes Seiten-Rahmensegment 42 versteift, vgl. hierzu Fig. 3 oder 4. Im gezeigten Ausführungsbeispiel sind die beiden Seiten-Rahmensegment 41, 42 als im wesentlichen ebene Bleche aus rostfreiem Stahl ausgebildet, die, auf die der Kontur des offenen Tragrahmens angepaßt und Vorderfläche 301 bzw. die Hinterfläche geschweißt, den offenen Tragrahmen zum Aufnehmer-Gehäuse 3 ergänzen, so dass es druckdicht ist. Als Stahl für den Tragrahmen 30, der dann also auch gleichzeitig Aufnehmer-Gehäuse 3 ist, kann beispielsweise rostfreier Stahl mit der europäischen Werkstoffnummer 1.4301 verwendet werden, die der amerikanischen Bezeichnung 304 entspricht. Das Aufnehmer-Gehäuse 3 dient, wie bereits eingangs erwähnt, einerseits dazu, innenliegende Bauteile und Komponenten des Messaufnehmers 1, wie z.B. die Meßrohre, den Erreger oder die Sensoren, vor äußeren Umwelteinflüssen, wie z.B. Staub oder Spritzwasser, zu schützen. Andererseits aber dient das Gehäuse auch dazu, bei allfälligen Schäden am Meßrohr, z.B. durch Rißbildung oder Bersten, ausströmendes Medium bis zu einem geforderten maximalen Überdruck im Inneren des Gehäuses möglichst vollständig zurückzuhalten. Anstelle des bereits erwähnten Stahls können auch andere geeignete Materialien für das Aufnehmer-Gehäuse 3, beispielsweise Aluminium, verwendet werden.

Wie in Fig. 1 gezeigt ist das Elektronik-Gehäuse 4 mit dem Meßaufnehmer 10 über ein halsartiges Übergangsstück 90 mechanisch verbunden. Alternativ kann das Elektronik-Gehäuse 4 beispielsweise aber auch entfernt vom Meßaufnehmer angeordnet und mit diesem über ein entsprechendes Anschluss-Kabel verbunden sein. Zum Anschließen der Meß- und Betriebelektronik ist in den Tragrahmen 30 gegenüber den Scheitel-Bogensegmenten 17, 27 und somit auch gegenüber dem Scheitel-Rahmensegment 35 eine mehrere elektrische Leiterbahnen 97 aufweisende Durchführung 96 befestigt, insb. druckdicht eingesetzt, die sich bis in das Übergangstück 90 erstreckt und die mit verschiedenen Leitungsdrähten 63, 64, 73, 74 93, 94 elektrisch verbunden ist. Das Übergangsstück 90 ist bevorzugt mit dem Tragrahmen 30 verschweißt. Ferner hat es eine ausreichend weite Bohrung 91, so dass die Durchführung 96 von außerhalb des Aufnehmer-Gehäuses 3 zugänglich ist.

Wie den vorangehenden Ausführungen unschwer entnehmbar, weist ein Meßaufnehmer der beschriebenen Art zumindest zwei oder auch mehrere Hohlkörper auf, nämlich das wenigstens eine Meßrohr 1 und das Aufnehmer-Gehäuse 3, von denen wenigstens einer betriebsgemäß oder im Falle eines Gerätefehlers mit Druck beaufschlagt werden kann, und von denen wenigstens einer eine Wandung aufweist, die zumindest teilweise aus einem duktilen, insb. auch unterhalb der Rekristallisationstemperatur plastisch verformbaren, Material, wie z.B. Stahl, Titan oder einem anderen Metall, besteht oder gebildet ist. Jeder dieser Hohlkörper 1, 2, 30 weist weiters, wie bereits für die Meßrohre 1, 2 detailierter ausgeführt, mechanische Eigenfrequenzen auf, deren jeweiliger momentaner Frequenzwert u.a. von der Raumform des Hohlkörpers, einer Wandstärke seiner Wandung, dem dafür verwendeten Material sowie auch dem im Lumen des Hohlkörpers momentan gehalten Medium beeinflußt wird.

Wie schon eingangs erwähnt, ist bei In-Line-Meßaufnehmern der beschriebenen Art, insb. solchen vom Vibrationstyp, erforderlich sicherzustellen, daß die Eigenfrequenzen der einzelnen Hohlkörper zumindest innerhalb bestimmter Intervalle gehalten werden, um beispielsweise die erforderliche Meßgenauigkeit erreichen zu können.

Zum Einstellen wenigstens einer mechanischen Eigenfrequenz eines solchen, aus einem duktilen Material bestehenden Hohlkörpers, insb. des Aufnehmer-Gehäuses 3 oder des Meßrohrs 1, werden beim erfindungsgemäßen Verfahren ein statischer Außendruck einer der Hohlkörper umgebenden Atmosphäre und/oder ein in einem im wesentlichen druckdicht abgeschlossenen Lumen des Hohlkörpers herrschenden statischen Innendrucks geändert, wodurch eine von Null verschiedene Druckdifferenz zwischen dem Lumen und der der Hohlkörper umgebenden Atmosphäre erzeugt wird. Die Druckdifferenz wird dabei, beispielsweise durch Erhöhung des Innendrucks oder durch Absenken des Außendrucks, so eingestellt, daß das Material, aus dem der Hohlkörper gebildet ist, beispielsweise das Material der beiden Seiten-Rahmensegmente 41, 42, zumindest abschnittsweise so gedehnt wird, daß eine Fließgrenze des Materials, also jener Dehnungswert, bei dem das Material anfängt sich plastisch zu verformen, überschritten und dieses somit unter Einwirkung der Druckdifferenz plastischen verformt wird, vgl. auch Fig. 4 und 5. Die Verformung des Hohlkörpers führt insgesamt dazu, daß dessen Raumform - wenn auch in sehr geringem Maße - in der Weise geändert wird, daß eine signifikante Änderung wenigstens einer der mechanischen Eigenfrequenzen erreichte werden kann. Dabei kann durch eine geeignete Wahl der Höhe, der Dauer und/oder des zeitlichen Verlaufs der sich ändernden Druckdifferenz ein gezieltes Abstimmen der mechanischen Eigenfrequenzen des Meßaufnehmers aufeinander vorgenommen werden.

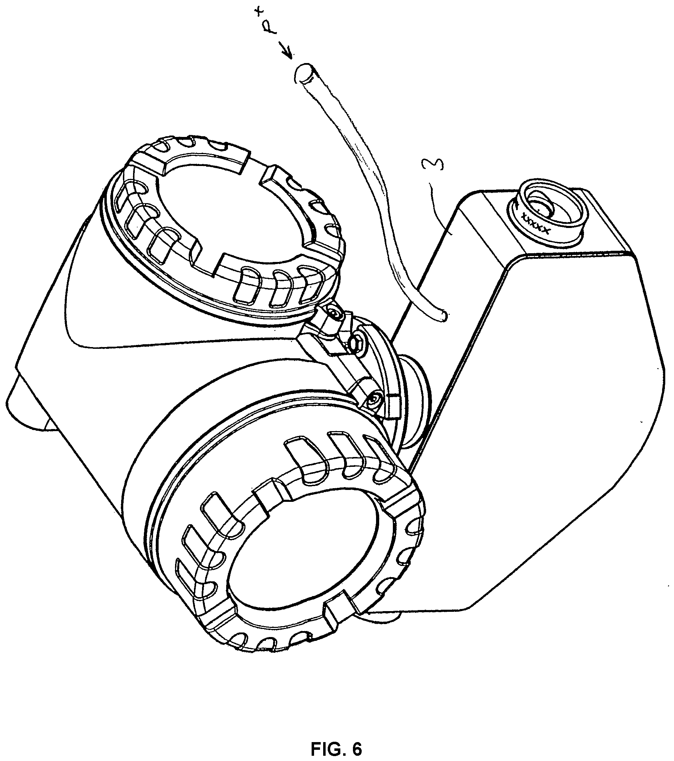

Nach einer Ausgestaltung des Verfahrens der Erfindung wird die Druckdifferenz zwischen dem Lumen und der den Hohlkörper umgebenden Atmosphäre dadurch erzeugt, daß, wie in Fig. 6 schematisch dargestellt, ein unter hohem Druck p⁺ stehendes Fluid, beispielsweise Luft, Stickstoff oder dergleichen, in das Lumen des Hohlkörpers einströmen gelassen wird. Der entsprechende Hohlkörper wird also praktisch "aufgeblasen", wobei seine Wandung, wie in Fig. 4 und 5 mit den leicht nach außen gewölbten Seiten-Rahmensegmenten 41, 42 angedeutet, zumindest abschnittsweise plastisch verformt wird. Anstelle der vorgenannten Gase können aber auch Flüssigkeiten oder auch Flüssigkeits-Gas-Gemische als Fluid verwendet werden. Nach dem ausreichenden plastischen Verformen des Materials kann der Hohlkörper wieder auf den normalen Umgebungsdruck gebracht werden. Zum Einleiten des Fluids in das Lumen des Hohlkörpers können je nach Anwendungsfall beispielsweise an eine der Flansche 2, 3 oder beispielsweise an den dem Flansch 90 für das Elektronik-Gehäuse 4 ein entsprechender Schlauchanschluß für eine das unter Druck stehende Fluid führende Druckleitung bzw. Verschlußmittel zum druckdichten Verschließen des betreffenden Hohlkörpers anmontiert werden. Nach einer Ausgestaltung des Verfahrens erfolgt das Einleiten des Fluids in den Hohlkörper sowie dessen Verformung bei einer Arbeitstemperatur die auf Raumtemperaturniveau, also etwa im Bereich zwischen 15°C und 35°C, liegt, insb. auch ohne zusätzliche lokale Erhitzung des Materials etwa in die Nähe von dessen Rekristallisationstemperatur.

Für den oben beschriebenen Fall, daß der Meßaufnehmer zwei oder mehr solcher Hohlkörper der beschriebenen Art aufweist, ist gemäß einer weiteren Ausgestaltung des Verfahrens der Erfindung vorgesehen, in wenigstens zwei derselben gleichzeitig jeweils ein unter Druck stehendes Fluid einströmen zu lassen, beispielsweise in das Aufnehmer-Gehäuse und in das wenigstens eine Meßrohr. Beispielsweise kann so das im Lumen des Aufnehmer-Gehäuse 3 angeordnete Meßrohr 4 sowohl von außen als auch von Innen mit etwa demselben Druck, also mit einer Druckdifferenz zwischen zwischen dem zugehörigen Lumen und der den Hohlkörper umgebenden Atmosphäre von etwa Null beaufschlagt werden, während das Aufnehmer-Gehäuse 3 in der entsprechende Weise gleichzeitig mit einer von Null verschiedenen Druckdifferenz beaufschlagt wird. Dies führt dazu, daß das Meßrohr durch den im Lumen des Aufnehmer-Gehäuses 3 wirkenden Überdruck praktisch kaum oder gar nicht verformt wird.

Nach einer Weiterbildung des Verfahrens der Erfindung ist vorgesehen, die Druckdifferenz auch nach dem Beginn des plastischen Verformens des Hohlkörpers bis auf einen vorgegeben Wert und/oder für eine vorgebbare Dauer weiter zu erhöhen.

Nach einer anderen Weiterbildung des Verfahrens der Erfindung ist vorgesehen, die Druckdifferenz für eine vorgebbare Dauer auf einem Wert zu halten, der zumindest anfänglich das Material des Hohlkörpers fließen läßt. Die Dauer mit der die Druckdifferenz erhöht oder mit der die Druckdifferenz auf einem erhöhten Wert gehalten wird, wie auch die Werte für die Druckdifferenz selbst können für den jeweiligen Meßaufnehmer ohne weiters kalibriert werden.

Obwohl bei den vorbeschriebenen Ausführungsbeispielen jeder der Hohlkörper so ausgebildet ist, daß er praktisch lediglich ein einziges, zu verformendes und in sich geschlossenes Lumen aufweist, nämlich das im Inneren des Messrohrs 1 bzw. das im Inneren des Aufnehmer-Gehäuses 3 gebildete Lumen, besteht auch die Möglichkeit, das zu verformende Lumen von einem im obigen Sinne nicht zu verformenden Lumen des Hohlkörpers zumindest während des Einleitens des unter Überdruck stehenden Fluids druckdicht so abzuteilen, daß die beiden so erhaltenen Teil-Lumen nicht mit einander kommunizieren, und somit lediglich einen vorbestimmten Teilbereich des Hohlkörpers durch Einleiten von unter Überdruck stehendem Fluid plastisch zu verformen.

Demgemäß ist das Lumen, das mit dem unter hohem Druck p⁺ stehenden Fluid beaufschlagt wird, gemäß einer Ausgestaltung der Erfindung von einem ersten Teilvolumen des Hohlkörpers gebildet, das von einem ein zweites Teilvolumen des Hohlkörpers bildenden übrigen Bereich des Hohlkörpers durch eine Trennwand druckdicht abgeteilt ist, und das zumindest zeitweise nicht mit diesem zweiten Teilbereich kommuniziert.

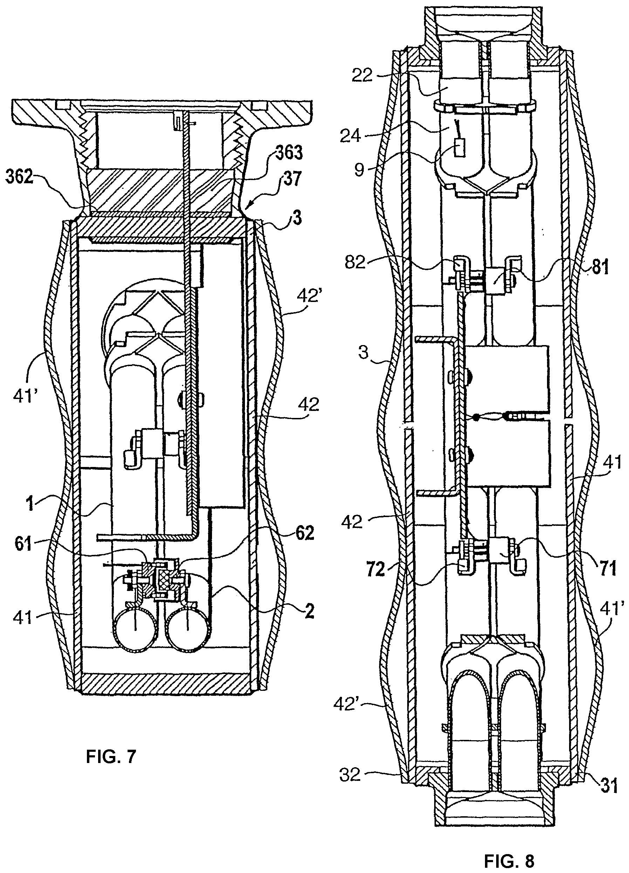

Beispielsweise kann das erste Teilvolumen auf sehr einfache Weise dadurch gebildet sein, daß der als Aufnehmer-Gehäuse 3 zu verwendende Hohlkörper, wie auch in Fig. 7 und 8 dargestellt, zumindest abschnittsweise doppelwandig ausgebildet ist, und daß zwischen einer ersten und einer darüberliegend angeordneten zweiten Wand ein das Lumen bildender Hohlraum belassen wird, wobei die beiden Wände mittels einer umlaufenden, in sich geschlossenen Randnaht, beispielsweise einer Löt-, Schweiß- oder einer Laser-Schweißnaht oder dergleichen, miteinander druckdicht verbunden sind. Eine solche Doppelwand-Struktur kann auf einfache Weise z.B. dadurch gebildet sein, daß auf jedes der beiden Seiten-Rahmensegmente 41, 42 jeweils ein zusätzliches ebenes Blech 41', 42' angeordnet ist, das in einem umlaufenden Randbereich mit dem jeweiligen Seiten-Rahmensegment 41 oder 42 druckdicht verbunden ist, und daß, wie in Fig. 7 und 8 angedeutet, durch Einleiten des unter Überdruck stehenden Fluids in den so gebildeten Hohlraum ein Aufweiten desselben bewirkt wird. Das jeweilige Blech 41', 42' kann dabei entweder mit dem jeweils zugehörigen Seiten-Rahmensegment 41, 42 zur Deckung gebracht werden oder aber auch nur einen ausgewählten kleineren Bereich des jeweiligen Seiten-Rahmensegments 41, 42 abdecken. Zu dem ist es ferner möglich, jedes der Seiten-Rahmensegmente 41, 42 mit dem jeweils zugehörigen Blech 41' bzw. 42 innerhalb eines von der Randnaht eingeschlossenen Bereichs zusätzlich punktuell miteinander, beispielsweise mittels LaserSchweißung, verbunden sind, wodurch eine der Hohlraum praktisch in einzelne, miteinander kommunizierende Kammern aufgeteilt und eine zusätzliche Versteifung des Hohlkörpers erzielt wird. Infolgedessen werden gleichzeitig aber auch einige von dessen Eigenfrequenzen erhöht.

Ein Vorteil des erfindungsgemäßen Verfahrens ist u.a. darin zu sehen, daß Hohlkörper der beschriebenen Art, wie bereits erwähnt, zumeist auch auf ihre Druckfestigkeit zu überprüfen sind und zu diesem Zwecke ohnehin mit einem erhöhten Innendruck beaufschlagt werden müssen. Somit kann für diesen Fall die Einstellung der Eigenfrequenz bereits durch eine vergleichsweise geringfügige Modifikation der vorgesehenen Druckprüfung erfolgen, und zwar in der Weise, daß vor oder nach dem Einstellen des für die Druckprüfung erforderlichen Werts für die Druckdifferenz der für das plastische Verformen erforderliche Wert für die Druckdifferenz eingestellt wird, beispielsweise durch eine entsprechende Erhöhung eines Drucks des für die Druckprüfung verwendeten und bereits in den Hohlkörper eingeleiteten Prüf-Fluids. In entsprechender Weise können ggf. auch die für die Druckprüfung verwendeten Aggregate sowie auch die für die Druckprüfung bereits vorgesehenen Druckanschlüsse bzw. Verschlußmittel, z.B. am Aufnehmer-Gehäuse oder am Meßrohr, mit verwendet werden. Die zum Verstimmen des betreffenden Hohlkörpers erforderliche Druckerhöhung kann ohne weiteres vorab kalibriert werden, so daß dann praktisch ohne weiteren Mehraufwand eine gut reproduzierbare Einstellung zumindest der betreffenden Eigenfrequenz, insb. auch automatisch, erfolgen kann. Darüber hinaus kann mittels des erfindungsgemäßen Verfahrens, insb. bei dessen Anwendung auf als Tragrahmen vorgesehene Hohlkörper, die zumeist ebenfalls geforderte hohe statische Steifigkeit durch die plastische Verformung des Materials in vorteilhafter Weise erhöht werden, insb. auch bei der vorbeschriebenen Anordnung des verformten Lumens innerhalb einer Doppelwand-Struktur. Ein weiterer Vorteil des erfindungsgemäßen Verfahrens besteht zu dem auch darin, daß das es weit unterhalb der Rekristallisationstemperatur des zu verformenden Materials, insb. auch bei normaler Raumtemperatur im Bereich von etwa 25°C, durchgeführt und insoweit auch als das Material kalt umformendes Verfahren angewendet werden kann.

## Patentansprüche

1. Verfahren zum Einstellen einer mechanischen Eigenfrequenz eines zumindest teilweise aus einem duktilen Material bestehenden, als Aufnehmer-Gehäuse (3) eines Meßaufnehmers (10) oder als Meßrohr (1, 2) eines Meßaufnehmers (10) dienenden Hohlkörpers, welches Verfahren folgende Schritte umfaßt:
- Ändern eines statischen Außendrucks einer den Hohlkörper umgebenden Atmosphäre und/oder Ändern eines in einem im wesentlichen druckdicht abgeschlossenen Lumen des Hohlkörpers herrschenden statischen Innendrucks zum Erzeugen einer Druckdifferenz zwischen dem Lumen und der den Hohlkörper umgebenden Atmosphäre,
- Einstellen der Druckdifferenz auf einen Wert, der ein Dehnen des Materials des Hohlkörpers bewirkt, sowie
- Fließenlassen zumindest eines Anteils des Materials des Hohlkörpers unter Einwirkung der Druckdifferenz zum plastischen Verformen des Materials.

2. Verfahren gemäß Anspruch 1, bei welchem Verfahren der Schritt des Erzeuges der Druckdifferenz zwischen dem Lumen und der den Hohlkörper den Schritt Einströmenlassen eines unter Druck stehenden Fluids, insb. Luft oder Stickstoff, umfaßt.

3. Verfahren gemäß Anspruch 1 oder 2, weiters umfassend den Schritt des weiteren Erhöhens der Druckdifferenz auch nach dem Beginn des plastischen Verformens des Hohlkörpers.

4. Verwendung eines gemäß dem Verfahren nach einem der Ansprüche 1 bis 3 abgestimmten Hohlkörpers als Meßrohr (1, 2) eines Meßaufnehmers (10), insb. eines Meßaufnehmers vom Vibrationstyp, zum Führen eines zu messenden Mediums, das in einer an das Meßrohr (1, 2) angeschlossenen Rohrleitung strömt.

5. Verwendung eines gemäß dem Verfahren nach einem der Ansprüche 1 bis 3 abgestimmten Hohlkörpers als Aufnehmer-Gehäuse (3) eines Meßaufnehmers (10), insb. eines Meßaufnehmers vom Vibrationstyp.

## Claims

1. Procedure for setting a mechanical natural frequency of a hollow body which is made at least partially from a ductile material and serves as a sensor housing (3) of a sensor (10) or as a measuring tube (1, 2) of a sensor (10), said procedure comprising the following steps :
- Modification of a static exterior pressure of an atmosphere surrounding the hollow body and/or modification of a static interior pressure present in a channel of the hollow body, said channel being sealed essentially pressure-tight, to generate a pressure difference between the channel and the atmosphere surrounding the hollow body,
- Setting of the pressure difference to a value that causes the material of the hollow body to expand, and
- Allowing at least part of the material of the hollow body to flow under the influence of the pressure difference for the purpose of the plastic deformation of the material.

2. Procedure as claimed in Claim 1, wherein the step involving the generation of the pressure difference between the channel and hollow body comprises the step of allowing a pressurized fluid, particularly air or nitrogen, to flow.

3. Procedure as claimed in Claim 1 or 2, further comprising the step to further increase the pressure difference also following the commencement of the plastic deformation of the hollow body.

4. Use of a hollow body adapted in line with one of the Claims 1 to 3 as a measuring tube (1, 2) of a sensor (10), particularly of a vibronic type sensor, to conduct a medium to be measured which flows through a pipe connected to the measuring tube (1, 2).

5. Use of a hollow body adapted in line with one of the Claims 1 to 3 as a sensor housing (3) of a sensor (10), particularly a vibronic type sensor.

## Revendications

1. Procédé destiné au réglage d'une fréquence propre mécanique d'un corps creux constitué au moins partiellement d'une matière ductile, lequel corps creux fait office de boîtier (3) d'un capteur (10) ou de tube de mesure (1, 2) d'un capteur (10), lequel procédé comprend les étapes suivantes :
- Modification d'une pression extérieure statique d'une atmosphère entourant le corps creux et/ou modification d'une pression intérieure statique régnant dans un canal intérieur du corps creux pour l'essentiel étanche à la pression, en vue de la génération d'une différence de pression entre le canal intérieur et l'atmosphère entourant le corps creux,
- Réglage de la différence de pression à une valeur qui provoque un allongement de la matière du corps creux, ainsi que
- Fluage d'au moins une partie de la matière du corps creux sous l'influence de la pression en vue d'une déformation plastique de la matière.

2. Procédé selon la revendication 1, pour lequel l'étape de génération de la différence de pression entre le canal intérieur et le corps creux comprend l'étape d'écoulement d'un fluide sous pression, notamment de l'air ou de l'azote.

3. Procédé selon la revendication 1 ou 2, comprenant en outre l'étape de l'augmentation supplémentaire de la pression différentielle, y compris après le commencement de la déformation plastique du corps creux.

4. Utilisation d'un corps creux adapté conformément au procédé selon l'une des revendications 1 à 3 en tant que tube de mesure (1, 2) d'un capteur (10), notamment d'un capteur du type à vibrations, destiné au guidage d'un produit à mesurer s'écoulant dans une conduite raccordée au tube de mesure (1, 2).

5. Utilisation d'un corps creux adapté conformément au procédé selon l'une des revendications 1 à 3 en tant que boîtier (3) d'un capteur (10), notamment d'un capteur du type à vibrations.
